(19)

Europäisches
Patentamt
European
Patent Office
Office européen
des brevets

(11) **EP 3 104 195 B1**

(12) **EUROPEAN PATENT SPECIFICATION**

(45) Date of publication and mention
of the grant of the patent:
**14.08.2024  Bulletin 2024/33**

(21) Application number: **15171363.3**

(22) Date of filing: **10.06.2015**

(51) International Patent Classification (IPC):
**G01S 19/30** *(2010.01)*

(52) Cooperative Patent Classification (CPC):
**G01S 19/30**

(54) **METHOD AND APPARATUS FOR TRACKING A BINARY OFFSET CARRIER NAVIGATION SIGNAL**

VERFAHREN UND VORRICHTUNG ZUM VERFOLGEN EINES BINÄREN
OFFSET-TRÄGERNAVIGATIONSSIGNALS

PROCÉDÉ ET APPAREIL DE POURSUITE D'UN SIGNAL DE NAVIGATION À PORTEUSE À
DÉCALAGE BINAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.12.2016  Bulletin 2016/50**

(73) Proprietor: **European Space Agency
75738 Paris Cedex 15 (FR)**

(72) Inventor: **Molina, Jose Antonio Garcia
Noordwijk (NL)**

(74) Representative: **D Young & Co LLP
3 Noble Street
London EC2V 7BQ (GB)**

(56) References cited:
**EP-A1- 2 743 730**

• **NESREEN I ZIEDAN: "Bayesian Filtering
Approaches for Unambiguous BOC Tracking
under Weak Signal Conditions", GNSS 2011 -
PROCEEDINGS OF THE 24TH INTERNATIONAL
TECHNICAL MEETING OF THE SATELLITE
DIVISION OF THE INSTITUTE OF NAVIGATION
(ION GNSS 2011), THE INSTITUTE OF
NAVIGATION, 8551 RIXLEW LANE SUITE 360
MANASSAS, VA 20109, USA, 23 September 2011
(2011-09-23), pages 2790, XP056000642**
• **MUSSO M ET AL: "A New Fine Tracking Algorithm
for Binary Offset Carrier Modulated Signals",
GNSS 2006 - PROCEEDINGS OF THE 19TH
INTERNATIONAL TECHNICAL MEETING OF THE
SATELLITE DIVISION OF THE INSTITUTE OF
NAVIGATION (ION GNSS 2006), THE INSTITUTE
OF NAVIGATION, 8551 RIXLEW LANE SUITE 360
MANASSAS, VA 20109, USA, 29 September 2006
(2006-09-29), pages 834 - 840, XP056010050**

Processed by Luminess, 75001 PARIS (FR)

## Description

Field of the Invention

The present invention relates to a method and apparatus for tracking a binary offset carrier navigation signal provided by a global navigation satellite system (GNSS).

Background of the Invention

Global navigation satellite systems (GNSS) are becoming increasingly important in a wide range of applications, including in-car navigation support, location-based services for smartphones, and so on. Example implementations of a GNSS system are described in WO 2006/063613 and WO 2007/101454.

Current and future generations of GNSS, such as GPS, Compass or Galileo, have chosen binary offset carrier (BOC) signals for the modulation of the transmitted navigation signals. The usage of BOC signals in GNSS is in general of interest due to the better code tracking accuracy provided when compared to the BPSK modulation (used e.g. in GPS L1 C/A), at the cost of new correlation peaks appearing in the autocorrelation function, introducing therefore an ambiguity in the code delay estimation.

A typical GNSS receiver estimates its position based on, among others, the code delay estimation of the navigation signals received from different GNSS satellites. For this reason, an accurate estimation of the code delay is of interest to minimise the receiver position error. In the particular case of BOC navigation signals being transmitted, the code delay estimation can be biased if the code delay ambiguity is not resolved properly. The presence of a bias in the code delay estimation is translated into a position error. Therefore, the resolution of the code delay ambiguity when tracking a BOC signal in a GNSS receiver is a very significant aspect.

BOC signals are characterized by the presence of a subcarrier component multiplying a given sequence of binary coded symbols (such as a spreading code). BOC signals are in general denoted as $BOC(fs,fc),$ where fs refers to the subcarrier frequency and $fc$ to the code chip rate. In GNSS, the nomenclature $BOC(n,m)$ is typically used, with $n=fs/f0,$ $m=fc/f0$ and $f0$ the fundamental frequency (1.023MHz). The subcarrier component can be defined as the sign of a sine or a cosine waveform with the corresponding frequency, producing sine-phased or cosine-phased BOC signals, denoted as $BOCsin(n,m)$ and $BOCcos(n,m),$ respectively.

In the case of high-order BOC signals, the side peaks in the autocorrelation function might be only few meters away from the main correlation peak (which is the reference to be tracked). Therefore, in conventional GNSS code delay tracking architectures, there is a risk to lock onto one of those side peaks instead of the main peak, inducing therefore a bias in the code delay estimation. N.B. "high-order" indicates here that the subcarrier frequency is a relatively high multiple of the code chip rate.

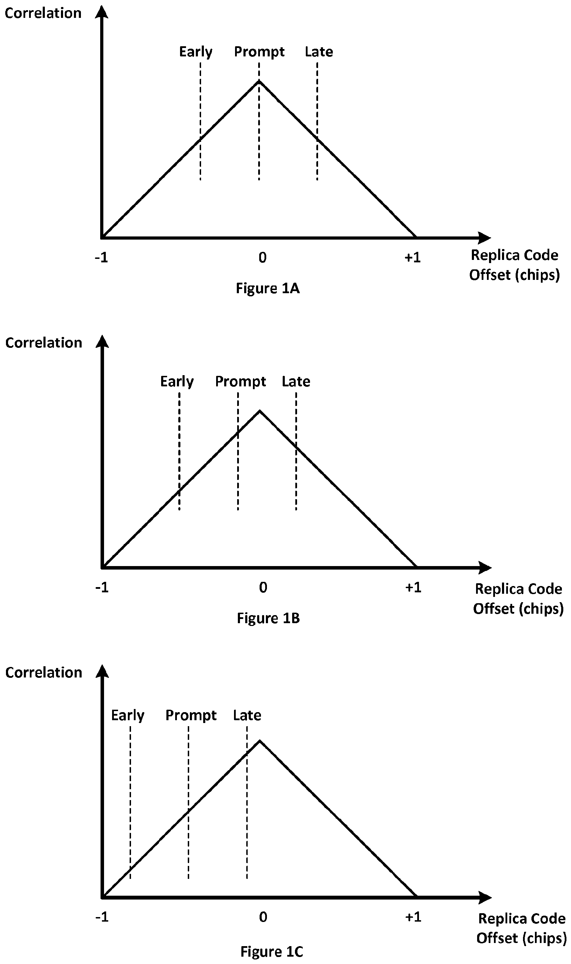

In Figures 1A, 1B and 1C, the ideal autocorrelation function of a BPSK signal is considered, under the assumption of infinite bandwidth. For the tracking of a BPSK signal in a typical GNSS receiver, only 3 correlation samples are used in the estimation process. These correlation samples are typically denoted as "prompt" (P), "early" (E) and "late" (L) [10]. For the generation of these correlation samples, the replica (reference) code generated by the receiver is correlated with the incoming signal for three different replica code offsets. In the ideal case, the prompt correlation sample should correspond to the maximum of the correlation function (see Figure 1A), in which case the prompt replica code will be perfectly aligned in time with the incoming signal being tracked. The value of the absolute code offset between early and prompt replicas is typically equivalent to the absolute code offset between the late and prompt replicas. The early to late (E-L) code offset is typically below or equal to 1 chip.

In a typical GNSS receiver, the E, P and L correlation samples are exploited in order to align the P correlation sample with the maximum of the correlation function (i.e. to align the prompt code replica with the incoming signal being tracked). This alignment process is conceptually illustrated in Figures 1A, 1B and 1C. In Figure 1A the prompt is aligned with the maximum of the correlation function, and both E and L correlation samples have the same value (given the symmetry of the correlation function), indicating the correct code tracking of the incoming signal. In Figures 1B and 1C, the P correlation sample is advanced with respect to the maximum of the correlation. In this case, the value of E and L correlation samples are different from one another, and this can be used to update the current estimation in order to (re)align the prompt sample with the maximum of the correlation function.

As can be observed in Figures 1A, 1B and 1C, the autocorrelation function of a BPSK signal contains only one correlation peak. Therefore, the tracking of the maximum of the correlation function will provide in this case an unambiguous tracking of the incoming signal. In the case of a BOC signal however, the autocorrelation function contains several peaks. The number of peaks will depend on the subcarrier frequency and the code chip rate of the $BOC(n,m)$ signal considered.

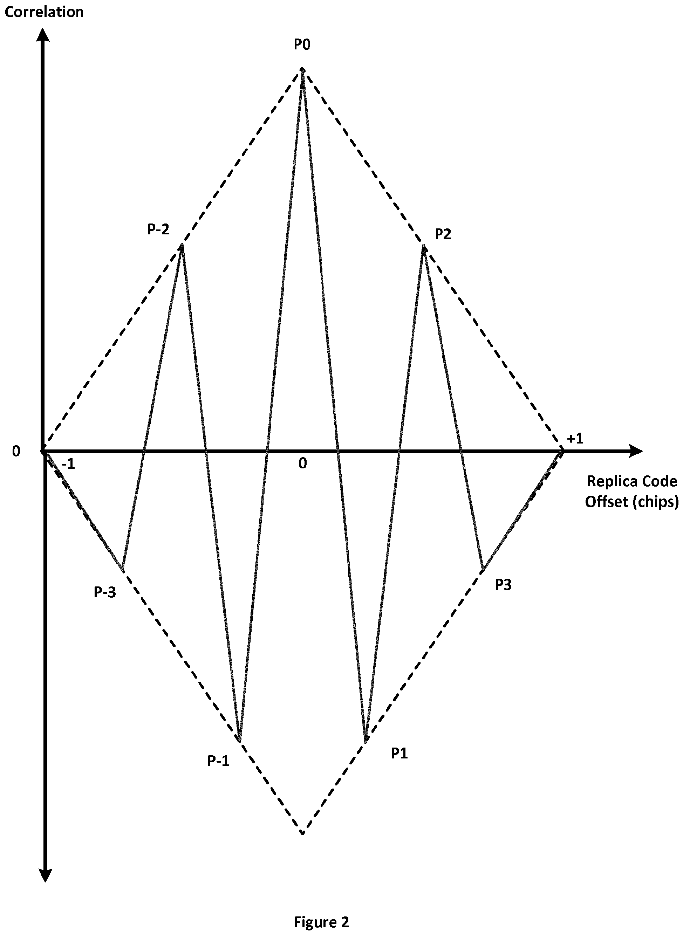

An illustrative example of the ideal autocorrelation function for a BOC(2,1) signal is shown in Figure 2 in solid line (the dashed line shows the triangular profile from Figure 1, in both positive and negative form, by way of comparison).

As can be observed, the width of the main, central peak (corresponding to P0 in Figure 2), is narrower than the BPSK peak of Figure 1, and this can help to provide a more accurate position estimate. On the other hand, the tracking of the main correlation peak is ambiguous due to the presence of side peaks (corresponding in Figure 2 to P1, P-1, P2, P-2, P3 and P-3). Therefore, a receiver tracking a BOC signal has to be able to identify the main correlation peak from all the peaks present in the BOC autocorrelation function. There is a risk to lock onto one of the side peaks (i.e. of having a false lock), therefore inducing a bias into the code delay estimation. The possibility of false lock can be especially important in harsh channel conditions, where unambiguous tracking can be difficult due to the low carrier-to-noise density ratio, and due to the presence of multipath, especially when combined with fading periods.

The unambiguous tracking of high-order BOC signals is an open problem in the literature. A number of techniques exist, which can be categorised into different families. The most straightforward approach is perhaps the tracking of the equivalent BPSK envelope [5], as per the dashed lines of Figure 2. One downside with this approach is that it loses the higher accuracy provided by the BOC modulation (resulting from the narrower main correlation peak), but it does successfully removing the ambiguity problem.

Other known techniques try to cancel the side peaks of the BOC autocorrelation function by applying different signal combinations, thereby avoiding the risk of ambiguity. These techniques are generally non-linear and resulting in an un-matched filtering of the BOC signal [7]. Within this group of techniques is the ASPeCT [8] technique, which was developed having in mind low-order BOC signals only.

Another group of techniques try to track unambiguously the full BOC correlation function, preserving in this way the original accuracy of the signal. In this case the idea is to try to identify continuously the main peak to be tracked, as well detecting if a false lock has been produced and applying corrective measures accordingly. Within this group of techniques one can find examples such as Bump Jumping (BJ) [6], the Double Estimator (DE) [4], the Code-Subcarrier Smoothing [2] or the Astrium Correlator [3].

The Bump Jumping technique was the first technique presented to detect and solve the ambiguity issue. The approach in this case is to place two extra correlators -typically called Very-Early (VE) and Very-Late (VL) - in the secondary (side) peaks, and solve the ambiguity by comparing the relative amplitude between them. The principle of Bump Jumping is that the separation of the peaks arising from the subcarrier modulation is both regular and known. Therefore, if the system locks onto a given peak, it can set VE and VL to correspond to the immediately neighbouring peaks on either side of the locked peak.

If we consider the situation shown in Figure 2, if the locked peak is truly the main peak, P0, then VE may correspond to peak P-1 and VL may correspond to peak P1. In this case, $|VE|=|VL|$, and we can use this finding to confirm that the locked peak is indeed the desired main peak. However, if the system has locked by accident onto peak P2, the VE corresponds to peak P1, and VL corresponds to peak P3. In this case $|VE|>|VL|$ (based on the magnitude of the peak). Since $|VE|\neq|VL|$, we therefore know that the locked peak is *not* the main peak, and also, since $|VE|>|VL|$, we know the direction in which to travel to locate the main peak. Accordingly, in response to finding $|VE|\neq|VL|$, the system re-locks onto the immediately adjacent peak in the appropriate direction - i.e. a bump jump. In the case of Figure 2, with an initial lock on P2, we would expect a first bump jump to P1, and then a further bump jump to P0, whereupon the system should then lock successfully onto the main peak. However, Bump Jumping can be susceptible to noise, multipath and any signal distortion impacting the relative heights of the additional BOC peaks.

In the case of the Double Estimator (DE), a new receiver architecture is proposed having three loops - one for the carrier, one for the code and one for the subcarrier. This seeks to solve the ambiguity caused by the additional peaks by combining the independent code and subcarrier delay estimations. The Astrium Correlator is similar to the DE, but it implements a different receiver architecture, using one loop for tracking code and subcarrier components. The Code-Subcarrier Smoothing is based on the smoothing of the code delay estimation with the ambiguous BOC delay estimation.

In general, the unambiguous tracking techniques available in the literature -such as the ones presented in the previous paragraphs- are well-suited for good carrier-to-noise density ratio conditions and mild propagation environments, which are typical for fixed GNSS receiver stations. However, some of these techniques are very sensitive to the presence of noise, fading and multipath, and start being highly unstable at low carrier-to-noise density ratio values, as shown in [1]. Therefore, these techniques are generally not recommended for application in receivers working in urban or indoor applications, for which code tracking at low carrier-to-noise density ratio is of interest. Furthermore, most of those techniques are based on legacy GNSS receiver architectures, in which a closed-loop is implemented and relatively few correlators - typically up to 5 - are used in the code delay estimation.

Ziedan N. I., 24th International Technical Meeting of the Satellite Division of The Institute of Navigation, Portland OR, September 19-23,2011, discloses two Bayesian based algorithms that provide an unambiguous BOC tracking without compromising the advantages of the BOC modulation. The characteristics of the ACF are utilized in the design. The first algorithm is based on Extended Kalman filtering (EKF), while the second algorithm employs an optimal Bayesian filtering approach. Two delay lock loops (DLL) are implemented. The first DLL operates around the locked-on peak to refine the code delay estimate; its discriminator function is based on the narrow main lobe of the ACF. The measurements are taken from early and late correlators located within the locked-on lobe. The second DLL is designed to operate on the whole ACF coverage to detect any bias toward a side peak. The design is based on detecting the correct shape of the ACF. The output of the second DLL is processed to indicate the location of the main peak. The processed output is added to the output of the first DLL to accurately align the replica code with the received code.

Musso et al., ION GNSS 19th International Technical Meeting of the Satellite Division, 26-29 September 2006, Fort Worth, TX, discloses analysis of a new synchronization technique for Binary Offset Carrier (BOC) modulated signals will be presented. Goal of the proposed method is to improve the synchronization performances by reducing the synchronization errors due to the characteristic BOC cross-correlation function. The synchronization is generally based on the envelope of the cross-correlation between the received signal and the local replicas. In a classical NRZ modulation this envelope is approximately a triangle whose peak corresponds to the perfect synchronization between the incoming signal and local replicas. In the BOC case, instead, the cross-correlation is given by a set of triangles with positive and negative peaks in which only the central one corresponds to the perfect synchronization.

Summary of the Invention

The invention is defined in the appended claims.

As described herein, a tracking process maintains the unambiguous code phase estimation, corresponding to zero offset between the BOC navigation signal received by the GNSS receiver and the BOC signal replica generated by the GNSS receiver in the tracking process. Note that the location of zero offset is subject to change, based on the dynamics of the satellite and/or the receiver, plus changes in environment, such as atmospheric conditions, multipath propagation, etc. The methods disclosed herein, along with corresponding apparatus and computer programs, help, inter alia, to support the unambiguous tracking of such BOC navigation signals, which is especially a problem for GNSS receivers working in harsh propagation conditions (typical in urban and indoor environments) when high-order BOC signals are to be tracked unambiguously.

As described herein, a multi-correlator architecture is used for the partial or complete sampling of the correlation function. This knowledge of the correlation function, including not only the main peak but also some or all the side peaks, can provide useful information for estimating the code delay unambiguously. The estimation problem is extended to the case in which N samples of the correlation function are available and the approach described herein is able to perform an unbiased code delay estimation considering the full set of samples while maintaining the original BOC accuracy.

Some embodiments provide a computer program for implementing one or more of the methods described above. The computer program comprises computer program instructions which may be provided on a non-transitory computer readable storage medium, such as an optical disk (CD or DVD), hard disk, or flash memory. The computer program may be loaded into a computer memory from such a storage medium, or may be downloaded into the computer memory over a network, such as the Internet. The apparatus, e.g. receiver, loading the computer program may comprise one or more processors for executing the computer program, which comprises instructions that cause the apparatus to implement a method such as described above.

The methods described herein are generally implemented using some form of receiver, which may be a standalone device, or may be incorporated into some other device - e.g. mobile telephone, tablet, vehicle GPS (car, plane, ship, bicycle, etc), camera, or any other appropriate location monitoring/tracking system. The receiver may implement such a method at least in part by executing instructions on one or more processors (such as DSPs, GPUs, etc). More commonly, a receiver may implement such a method at least in part by utilising special purpose hardware - e.g. one or more chips specially designed to support the method, e.g. by providing multiple hardware correlators, etc.

Brief Description of the Drawings

Various embodiments of the invention will now be described in detail by way of example only with reference to the following drawings:

Figures 1A-1C are schematic diagrams of the autocorrelation function in the vicinity of zero offset for BPSK modulation, in conjunction with a technique for a receiver to follow this peak.

Figure 2 is a schematic diagram showing the impact of binary offset carrier (BOC) modulation on the autocorrelation function.

Figure 3 is a schematic diagram of a receiver for receiving a BOC navigation signal in accordance with some embodiments of the invention.

Figure 4A is a schematic diagram of processing performed by a method for tracking a BOC navigation signal in accordance with some embodiments of the invention.

Figure 4B is a schematic diagram of processing performed by a method for tracking a BOC navigation signal not encompassed by the scope of the claims.

Figure 5 is a schematic diagram showing the impact of binary offset carrier (BOC) modulation on the autocorrelation function, as per Figure 2, with the addition of various potential correlation locations.

Figure 6 is a graph illustrating the code error as a function of time for a known tracking method in comparison with the code error as a function of time for various tracking methods in accordance with some embodiments of the invention.

Detailed Description

A) Receiver

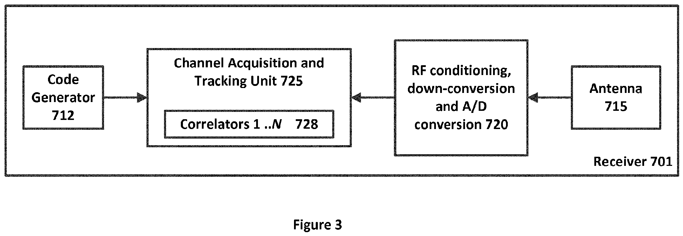

Figure 3 is a high-level schematic block diagram of a receiver 701 in accordance with some embodiments of the invention. The receiver 701 may be provided as a stand-alone unit, or may be incorporated into some larger device, for example a mobile (cellular) telephone, a computer, an automobile or other form of vehicle, a hospital bed, an aircraft or ship, a freight container, and so on. In operation, receiver 701 includes antenna 715 for receiving GNSS signals. The antenna 715 links to an RF conditioning, down-conversion and A/D conversion unit 720, which in turn passes the base-band complex envelope of the signal received to channel acquisition and tracking unit 725.

The receiver 701 also includes a code generator 712, which can generate (or store) the spreading codes (pseudo-random noise sequences) for the satellite constellation. The channel acquisition and tracking unit 725 is provided by the code generator 712 with the relevant spreading codes so that the incoming channel(s) can be acquired from the base-band complex envelope of the received signal. The channel acquisition unit 725 utilises the appropriate number of spreading codes to support the sequential or parallel operation of the channel acquisition unit as appropriate, i.e. in accordance with the number of receiver channels. In the illustrated embodiment, the channel acquisition and tracking unit 725 includes N correlators 728.

A receiver such as shown in Figure 3 is typically intended for use with global navigation satellite systems, in which the receiver receives a navigation signal from multiple satellites. Such navigation systems may, in some cases, include local elements (sometimes referred to as pseudolites). These are local positioning systems, for example at airports, that usually supplement the positioning signals from a satellite navigation system to provide additional location information. It will be appreciated that a receiver as described herein is intended to receive and process any suitable navigation signal (whether from a satellite, pseudolite, or any other relevant source).

B) Signal Tracking

In this discussion, the following notation will be used:

| | |
|---|---|
| $(\cdot)^T$ | transpose of a vector or matrix |
| $(\cdot)^H$ | conjugate transpose of a vector or matrix |
| $\hat{x}$ | an estimate of the quantity $x$ |
| $|x|$ | the modulus of the scalar $x$ |
| arg min $f(x)$ $x$ | the value of $x$ that minimizes $f(x)$ |

A method for tracking BOC signals will now be described. This method may be implemented in a receiver, for example in the channel acquisition and tracking unit 725 of receiver 701, which is assumed to produce N correlation samples. The method helps to perform an unambiguous tracking of BOC signals via the solution of two parallel and dependent optimization problems in which N samples of the correlation function are exploited. The two optimization problems are defined as follows:

1) The first optimization problem targets the accurate tracking of the code delay based on the main correlation peak, for which, in general, a subset of the $N$ samples available (e.g. the ones corresponding to the main correlation peak) are exploited in order to reduce the impact of noise and multipath on the estimation. This optimization problem is subject to a constraint (the tracking of the main peak) which is defined based on the solution of the second optimization problem.

2) The second optimization problem targets the identification of the main correlation peak (to form a constraint which is imposed on the first optimization problem), for which, in general, the full set of $N$ samples available are exploited, covering not only the main correlation peak but two or more side peaks.

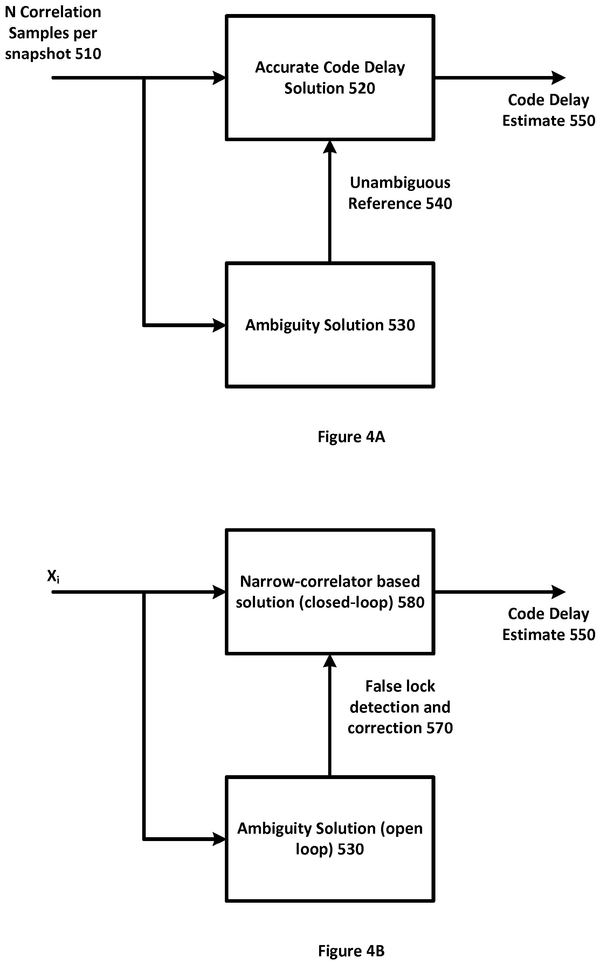

Figure 4A presents a high-level schematic description of this method. As can be seen from this Figure, the correlator produces snapshots of N correlation samples 510 at appropriate time intervals. Each snapshot represents the correlation function in the vicinity of zero offset (i.e. around the main correlation peak), such as shown in Figures 1 and 2. In particular, the correlation function is derived by correlating the incoming signal with various time-shifted versions of the expected signal (typically referred to as replica), so that the correlation with each time-shifted version (corresponding to a given replica code phase) provides one sample of the correlation function.

The correlation function comprising $N$ samples 510 is fed into the two optimization processes described above. One optimization process, indicated in Figure 4A as ambiguity solution 530, identifies the main peak of the correlation function (i.e. P0 in Figure 2, as opposed to any side peaks such as P-2 or P1). The identification of this peak is passed as an unambiguous reference (to the main peak) to the other optimization process, indicated in Figure 4A as accurate code delay solution 520. This second optimization uses the incoming N samples of the correlation function 510 and the unambiguous reference 540 from the ambiguity solution 530 to produce a code delay estimate 550.

In order to describe this method mathematically, we define the receiver complex correlation vector containing the set of $N=2Q+1$ complex correlation samples at the output of the multi-correlator, via coherent integration, at time instant i for the BOC signal to be tracked as:

$$\mathbf{x}_i = \begin{bmatrix} x_{i,1} & x_{i,2} & \dots & x_{i,N} \end{bmatrix}^T,$$

with $x_{i,n}$ representing the complex correlation sample at time instant $i$ for the $n$-th correlator. Accordingly, a snapshot can be obtained at time instant $i$ from a total of $N$ correlators (and so have $N$ complex correlation samples). In addition, $N$ can be represented as $2Q+1$ (where $Q$ can be selected for a given receiver according to the number of available correlators, etc), since the correlation samples are assumed to be symmetric about zero time offset (and with a sample obtained for zero time offset).

We define the expected correlation vector for a given code delay $\tau$, accounting in the correlation function r for any filtering applied by the receiver to the BOC signal (or any other effect that might be of interest to be accounted for), as:

$$\mathbf{r}(\tau) = \begin{bmatrix} r(\tau - Q) & r(\tau - Q + 1) & \dots & r(\tau + Q) \end{bmatrix}^T.$$

We now consider that a set of $R$ complex correlation vectors from instant $i-R+1$ to instant i are available, i.e. $x_{i-R+1:i} = \{x_{i-R+1},...,x_i\}$. This is of interest in order to consider several integration periods in the estimation, thereby targeting the improvement of the unambiguous tracking sensitivity. Based on the previous definitions, the method described herein provides an unambiguous code delay estimation $\hat{\tau}_i$ (i.e. a code delay estimation based on the main peak of the BOC correlation function) at time instant $i$ as the solution of the following non-linear minimization problem subject to a constraint:

$$\hat{\tau}_i = \arg\min_\tau \sum_{j=0}^{K-1} (\mathbf{x}_{i-j} - \hat{a}_{i-j,1}\mathbf{r}(\tau))^H (\mathbf{W}_1 \mathbf{C}^{-1})(\mathbf{x}_{i-j} - \hat{a}_{i-j,1}\mathbf{r}(\tau)) \quad subject\ to\ \left|\tau - \hat{\tau}_{ref_i}\right| < \beta, \tag{1}$$

where $\beta$ is a design parameter, which is BOC modulation dependent, being defined based on the separation between the main peak and the secondary side peaks of the BOC autocorrelation function (for example, $\beta$ might be set as half of the separation between the main peak and the secondary side peak). The parameter $\beta$ defines the maximum allowed difference between the estimated code delay $\hat{\tau}_i$ and a reference estimation (unambiguous) $\hat{\tau}_{ref\,i}$ defined as the solution of the following non-linear minimization problem:

$$\hat{\tau}_{ref_i} = \arg\min_\tau \sum_{j=0}^{P-1} (\mathbf{x}_{i-j} - \hat{a}_{i-j,2}\mathbf{r}(\tau))^H (\mathbf{W}_2 \mathbf{C}^{-1})(\mathbf{x}_{i-j} - \hat{a}_{i-j,2}\mathbf{r}(\tau)). \tag{2}$$

In equations (1) and (2) the following definitions apply:

a) the covariance matrix C of the complex colored noise present at post-correlation level is defined as an $N \times N$ non-diagonal matrix and it depends on the BOC signal to be tracked. $C^{-1}$ is the inverse matrix of C.

b) the "weighting" matrices $\mathbf{w}_m$ with $m=1$ in equation (1) and $m=2$ in equation (2) will in general (but not necessarily) be defined such that a subset (in equation (1)), or the full set (in equation (2)) of the $N$ available samples are in practice exploited in the minimization problem. Nevertheless, in some cases, it might be of interest not to exploit the full set of $N$ available samples in equation (2), with $\mathbf{w}_2$ being defined accordingly. In general, $\mathbf{W}_m$ will be defined

as an *N x N* diagonal positive definite matrix, although it could be defined in any other appropriate way, e.g. it could be defined as $\mathbf{W}_m = \mathbf{A}_m\mathbf{C}$, with $\mathbf{A}_m$ being an *Nx N* diagonal positive definite weighting matrix for selecting a subset or the full set of the *N* available samples for *m=1* and *m=2*, respectively - and resulting in $\mathbf{W}_m\mathbf{C}^{-1} = \mathbf{A}_m\mathbf{CC}^{-1} = \mathbf{A}_m$. In this case, equations (1) and (2) no longer include **C.**

c) the complex amplitudes $\hat{a}_{i\text{-}j,m}$, with *m=1* in equation (1) and *m=2* in equation (2), for every summand *j*, corresponding to the coherent integration for time instant *i-j,* can be estimated analytically following the well-known Least Squares solution [9]:

$$\hat{a}_{i-j,m} = (\mathbf{r}^{\mathrm{T}}(\tau)(\mathbf{W}_m\mathbf{C}^{-1})\mathbf{r}(\tau))^{-1}\mathbf{r}^{\mathrm{T}}(\tau)(\mathbf{W}_m\mathbf{C}^{-1})\mathbf{x}_{i-j} \tag{3}$$

Nevertheless, other solutions might be used instead to estimate these complex amplitudes.

d) *K* and *P* are integer numbers defining the number of integration times that are considered in the minimization problems in equations (1) and (2), respectively, in order to increase the unambiguous tracking sensitivity (where $K,P \le R$). It will be appreciated that this is analogous to the non-coherent integration typically performed in GNSS receivers operating in harsh propagation conditions. In general *K* will be set such that the code delay tracking based on the main correlation peak is robust enough, while P will be set such that the unambiguous identification of the main peak can be performed with a given false detection probability. *K* and *P* may be defined adaptively, e.g. based on the carrier-to-noise density ratio estimation, depending on the propagation environment under which the tracking is performed and the target false detection probability. By way of example, the coherent integration time in one implementation is 10 ms, the value of *K* is 10 (equivalent to a non-coherent integration time of 100 ms) and the value of *P* can be configured to 10, 30, 50 or 100. It will be appreciated that these parameters are provided for illustration only, and are likely to be increased or decreased as appropriate, e.g. depending upon the current noise level, the desired responsiveness to position changes, etc.

The non-linear minimization problems defined in equations (1) and (2), do not have an analytical solution (as far as we are aware), but can be solved iteratively (e.g. following the Newton-Raphson method) or via the application of grid-search approaches. Furthermore, it is to be noticed that a particular approximate solution of equation (1) may be obtained via the usage of the typical closed-loop narrow-correlator approach [10]. This provides one way to help implement the method described herein in current GNSS receiver architectures. In such an approach, an open-loop estimator based on equation (2) could then be used as a false lock detector working in parallel to the closed-loop narrow-correlator.

This latter approach, which is not encompassed by the scope of the claims, is illustrated in Figure 4B, which provides a high-level description of possible implementation of the approach described herein using a closed-loop narrow-correlator based solution. In particular, the tracking system receives the correlation values $\mathbf{x}_i$, as defined above ($\mathbf{x}_i = [x_{i,1}, x_{i,2} ... x_{i,N}]^{\mathrm{T}}$) which are fed to the closed-loop narrow-correlator based solution 580 to perform tracking and to generate a code delay estimate 550. The correlation values are also passed to the ambiguity solution component 530, which identifies the location of the main peak as per equation (2). This information is then passed to the closed-loop narrow-correlator based solution 580 as a signal 570 for detecting and correcting false locks.

We can consider the difference between the implementations of Figures 4A and 4B as follows. In the approach of Figure 4A, equations (1) and (2) are solved jointly as a single overall optimization, whereby the identification of the main peak according to equation (2) represents a constraint that is applied in determining the solution of equation (1). In contrast, in the approach of Figure 4B, there is greater independence between the solutions of equations (1) and (2). The ambiguity solution 530 is the used to identify if/when the closed-loop narrow-correlator based solution 580 has locked onto a peak other than the main peak. In this case, the ambiguity solution provides a suitable correction signal 570 to the closed-loop narrow-correlator based solution 580, which can then make suitable adjustments to the values of the correlators to be used for future tracking.

It will be appreciated that this approach of Figure 4B has certain parallels with Bump Jumping as described above, however, in Bump Jumping, the detection and correction of an incorrect peak is based on just two correlation points (Very Early and Very Late), whereas the ambiguity solution 530 uses more than two correlation points. Moreover, Bump Jumping only indicates whether or not the system should jump to an immediately adjacent peak (and if so, in which direction), it does not explicitly identify which is the main peak per se (thereby allowing the closed-loop narrow-correlator based solution 580 to relocate directly to the main peak, as required).

In some implementations, the closed-loop narrow-correlator based solution 580 may utilise correlations analogous to Early, Prompt, Late, such as indicated in Figure 1, to perform the location of the main peak. In this case, the spacing between E, P and L is reduced to reflect the narrowing of the main peak caused by the subcarrier modulation, as per the main peak in Figure 2, compared with the broader peak of Figure 1.

In general, the tracking approach defined above in equations (1) and (2) is based on the exploitation of two sets of correlation samples (both of which are derived from the total set of *N* correlation samples available). The selection of the set of correlation samples used in equations (1) and (2) is defined by the weighting matrices $W_1$ and $W_2$, as defined previously. The first set of correlation samples is exploited in the tracking of what is considered to be the main peak (in equation (1)), while the second set of correlation samples is exploited in the identification of the main peak (in equation (2)). Equation (2) provides a relatively coarse location for the main peak, but is able to accommodate the presence of multiple peaks in determining this coarse location - in other words, this process is able to discriminate between the multiple peaks in order to identify which of the multiple peaks represents the main peak corresponding to zero offset. This discrimination is based on the known structure of the multiple peaks produced by BOC, such as shown in Figure 2. In contrast, equation (1) provides greater (finer) location accuracy for the main peak, but is only expected to operate within the ambit of a single peak. Accordingly, the finely determined peak location of equation (1) is subject to a constraint (as per Figure 4A) or correction (as per Figure 4B) based on the more coarsely determined main peak location of equation (2).

In general (although not necessarily), the number of integration times K considered in the minimization problem defined in equation (1) is lower than the number of integration times $P$ considered in the minimization problem defined in equation (2), i.e. typically $K < P$. On the one hand, it is of interest that the fine code delay estimation performed via equation (1) is able to react as fast as possible to the signal dynamics, while at the same time providing reasonable robustness to the signal propagation conditions; the value of $K$ can be set based on a trade-off between these two factors. On the other hand, it is of interest that the coarse code delay estimation performed via equation (2) allows for a robust and stable identification of the main peak out of all the peaks observed. In this respect, it is to be noticed that, in general, only a relatively small number of correlation samples, corresponding to the main correlation peak, are exploited in equation (1) in order to reduce the impact of noise and multipath on the fine code delay estimation. In equation (2), a larger number of correlation samples, covering not only the main peak but also one or more side peaks, are generally exploited in order to identify which of the correlation peaks observed is the main peak. The usage of correlation samples covering several correlation peaks will increase the impact of noise and multipath on the coarse estimation performed via equation (2) in comparison with the fine estimation performed in equation (1). Thus in general having $P > K$ helps to compensate for the higher noise and multipath impact in equation (2) and to allow for a robust and stable identification of the main peak.

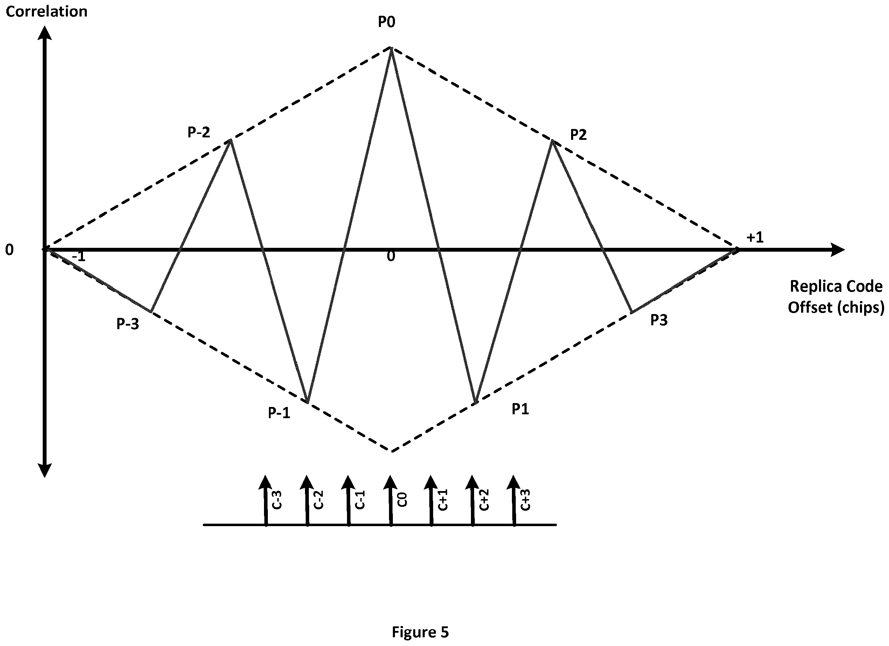

Figure 5 shows the same configuration of autocorrelation peaks as shown in Figure 2, in which an original single peak, centred at zero offset (and shown by the triangular dashed line envelope) has been split by the BOC modulation into a main central peak, P0 (also at zero offset) plus multiple side peaks at P-3, P-2, P-1, P1, P2, and P3. Figure 5 also indicates 7 locations for determining an autocorrelation value C-3, C-2, C-1, C0, C+1, C+2, C+3. The receiver may be provided with multiple correlators - e.g. seven in this example - to allow each correlator to simultaneously calculate the correlation at a respective offset (although other approaches may be used, depending upon the available hardware and software).

Based on the correlation positions shown in Figure 5, one option would be to base the fine tracking in equation (1) on correlations just at C-1, C0 and C+1 (somewhat analogous to the Early, Prompt and Late approach discussed earlier). The range of offset between C-1 and C+1 may be made sufficiently small to resemble the typical narrow-correlator approach, thereby reducing the impact of noise and multipath in the code tracking [10]. In contrast, the coarse tracking in equation (2) might be based on all seven correlations shown in Figure 5 (C-3, C-2, C-1, C0, C+1, C+2, C+3), since this gives good coverage across multiple peaks.

The fine correlation samples may be derived from a subset of the correlation samples used for the coarse correlation - e.g., in the context of Figure 5, using samples C-1, C0 and C+1 for the fine correlation, and using samples C-3, C-2, C-1, C0, C+1, C+2 and C+3 for the coarse correlation. However, in other implementations, some or all of the correlation samples used for the fine correlation might not be used for the coarse correlation (and/or vice versa). More generally, as specified in equations (1) and (2) above, there may be N correlation samples available, for which a first subset is used for the fine correlation of equation (1), and a second subset is used for the coarse correlation of equation (2), as defined by weighting matrices $W_1$ and $W_2$ respectively.

Although the fine correlation has generally been described as based on having 3 correlation samples in the first subset, some implementations may use more such samples (e.g. 5). Also, the second subset will generally contain more correlation samples than the first subset, and the correlation samples in the second subset will generally span a greater range of offset than the correlation samples in the first subset.

Overall, it will be appreciated that the number and locations of the correlations (C-3, C-2, C-1, C0, C+1, C+2, C+3) shown in Figure 5 is by way of example, and may vary across implementations. For example, one implementation has been simulated based on having 33 correlation samples (rather than the 7 shown in Figure 5), with a regular spacing between samples of 0.031 chips. This then gives a total offset range of approximately one chip, i.e. half of the full correlation function. Other implementations may have (for example) between 5-100 correlators, or between 10 and 50 correlators, or between 20 and 35 correlators, and corresponding chip spacings (for example) in the range 0.05-0.1 chips, 0.1-0.2 chips, etc. The various correlators may be spaced at regular or irregular intervals (in terms of offset).

C) Results

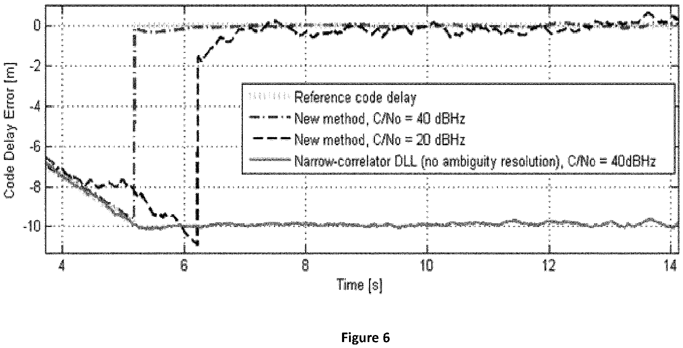

Figure 6 presents a graph illustrating the code delay error results obtained for a controlled scenario in which a false lock in a secondary peak of a BOC signal is induced (for the BOC signal considered, the secondary peak is at around 10 m from the main peak). The "reference" code delay is shown in green square dashes, and indicates how the false lock is introduced into the scenario (and from when it can be recovered). The graph also shows two lines produced using the method described herein, the first (blue dot-dash) for a nominal noise situation (carrier-to-noise density ratio of 40 dBHz), the second (black dash) for a higher noise situation (carrier-to-noise density ratio of 20 dBHz). The graph shows a further line (red solid) for a closed-loop narrow-correlator-based solution with no ambiguity resolution (in effect, the top half of the implementation shown in Figure 4B).

As shown in Figure 6, the closed-loop narrow-correlator-based solution does not recover from the false-lock (as would be expected). This results in a code delay bias of around 10 m that remains until the end of the simulation, since the receiver in effect tracks a side peak instead of the main peak. On the other hand, the method described herein recovers from the false lock even for low carrier-to-noise density ratio conditions. In particular, for the higher carrier-to-noise density ratio, the recovery of the true delay (zero offset) occurs rapidly, and subsequent tracking is accurate, whereas for the lower carrier-to-noise density ratio, the recovery of the true delay (zero offset) occurs more slowly, and subsequent tracking is somewhat less accurate (as would be expected).

Note that a similar simulation was also performed using an implementation of the known Bump Jumping approach described above. At a carrier-to-noise density ratio of 30 dBHz, this simulation found that the Bump Jumping approach did recover from the induced error back to the main peak, but was then subsequently subject to occasional, noise-induced, further jumps away from (and back to) the main peak. Accordingly, the performance of the implemented Bump Jumping approach was below the performance of the approach described herein, for which the main peak could be recovered and then properly tracked even for a carrier-to-noise density ratio of 20 dBHz.

In conclusion, a variety of embodiments have been described herein, but these are provided by way of example only, and many variations and modifications on such embodiments will be apparent to the skilled person and fall within the scope of the present invention, which is defined by the appended claims.

D) References

[1] J.A. Garcia-Molina, M. Navarro-Gallardo, G. Lopez-Risueño, and M. Crisci, "Unambiguous Tracking of High-Order BOC Signals in Urban Environments: Channel Considerations", Navitec 2014, Noordwijk, The Netherlands, December 2014.

[2] M. Navarro-Gallardo, G. Seco-Granados, G. López-Risueño, and M. Crisci, "Code smoothing for BOC ambiguity mitigation", ICL-GNSS 2013, Florence, Italy, Oct. 2013.

[3] F. M. Schubert, and J. wendel, "BOC Tracking using phase and subcarrier locked loops", 6th European Workshop on GNSS Signals and Signal Processing, Dec 5-6, 2013, Neubiberg, Germany.

[4] M. Hodgart, P. Blunt, and M. Unwin, "The optimal dual estimate solution for robust tracking of binary offset carrier (BOC) modulation", ION GNSS 2007, Fort Worth, TX.

[5] N. Martin, V. Leblond, G. Guillotel, and V. Heiries, "BOC(x,y) signal acquisition techniques and performances", ION GPS/GNSS 2003, Portland, OR, Sep. 2003.

[6] P. Fine, W. Wilson, "Tracking algorithm for GPS offset carrier signals", Proceedings of the 1999 National Technical Meeting of The Institute of Navigation, January 25 - 27, 1999, San Diego, CA.

[7] S. Kim, S. Yoo, S. Yoon, and S. Y. Kim, "A novel unambiguous multipath mitigation scheme for BOC(kn,n) tracking in GNSS", Proceedings of the 2007 International Symposiun on Applications and the Internet Workshops (SAINTW'07).

[8] O. Julien, C. Macabiau, M.E. Cannon, G. Lachapelle, "ASPeCT: Unambiguous sine-BOC(n,n) acquisition/tracking technique for navigation applications", Aerospace and Electronic Systems, IEEE Transactions on , vol.43, no.1, pp.150,162, January 2007

**EP 3 104 195 B1**

[9] S. M. Kay, "Fundamentals of Statistical Signal Processing. Estimation Theory", Prentice Hall, 2013

[10] E. D. Kaplan, C. J. Hegarty, "Understanding GPS, Principles and Applications", 2nd edition, Artech House, 2006

**Claims**

1. A method for tracking a binary offset carrier navigation signal in a global navigation satellite system (GNSS) receiver (701) by locating the main correlation peak of the binary offset carrier signal, wherein the binary offset carrier autocorrelation function is composed of a main peak, corresponding to zero offset, and multiple side peaks, each of known width, the method comprising:

   producing a set of N correlations from the binary offset carrier navigation signal at a time instant;
   using a first set of correlations, derived from the set of N correlations, to determine a coarse location of the main peak, so as to discriminate the main peak from the side peaks, wherein the determination is based in part on a post-correlation maximum-likelihood estimato based in part on a difference between the receiver complex correlation vector and an expected correlation vector using the covariance matrix of the complex coloured noise present at post correlation level for the set of N correlations, the covariance coloured noise matrix being dependent on the binary offset carrier signal to be tracked; and
   using a second set of correlations, derived from the set of N correlations, to determine a fine location of the main peak, wherein the second set of correlations are within said known width of the main peak, wherein the determination is based in part on a post-correlation maximum-likelihood estimator based in part on a difference between the receiver correlation vector and the expected correlation vector using the covariance matrix of the complex coloured noise present at post correlation level for the set of N correlations,
   and wherein the coarse location of the main peak from the first set of correlations is used to constrain the post correlation maximum-likelihood estimator used to determine the fine location of the main peak thereby constraining the fine location from the second set of correlations, such that the fine location is determined for said main peak to perform said tracking, wherein the expected correlation vector is for a given code delay and accounts for receiver effects.

2. The method of claim 1, wherein the first set of correlations spans at least the known width of the main peak plus at least a portion of the known width of two side peaks located immediately adjacent to, and on opposing sides of, the main peak.

3. The method of any preceding claim, wherein the number and location of the first set of correlations allow the main peak to be distinguished from the side peaks based on a known splitting of the autocorrelation function into the main peak and side peaks due to the binary offset carrier signal.

4. The method of any preceding claim, wherein the first set of correlations comprises at least five correlations.

5. The method of any preceding claim, wherein the second set of correlations utilises an Early correlation, a Prompt correlation, and a Late correlation.

6. The method of any preceding claim, wherein the number of correlations in the second set of correlations is less than the number of correlations in the first set of correlations.

7. The method of any preceding claim, wherein the correlations in the second set of correlations are re-calculated more frequently than the correlations in the first set of correlations.

8. The method of any preceding claim, wherein the coarse location of the main peak from the first set of correlations is used to constrain the second set of correlations so that the determined location is for the main peak.

9. The method of any preceding claim, wherein the second set of correlations is a subset of the first set of correlations.

10. The method of any preceding claim, wherein the receiver includes N correlators (728) for producing N respective correlations.

11. A receiver (701) for tracking a binary offset carrier navigation signal in a global navigation satellite system by locating the main correlation peak of the binary offset carrier signal, wherein the autocorrelation function is composed of a main peak, corresponding to zero offset, and multiple side peaks, each of known width, the receiver being configured to:

produce a set of N correlations from the binary offset carrier navigation signal at a time instant;
use a first set of correlations, derived from the N correlations, to determine a coarse location of the main peak, so as to discriminate the main peak from the side peaks, wherein the determination is based in part on a post-correlation maximum-likelihood estimator based in part on a difference between the receiver complex correlation vector and an expected correlation vector using the covariance matrix of the complex coloured noise present at post correlation level for the set of N correlations, the covariance coloured noise matrix being dependent on the binary offset carrier signal to be tracked; and
use a second set of correlations, derived from the N correlations, to determine a fine location of the main peak, wherein the second set of correlations are within said known width, wherein the determination is based in part on a post-correlation maximum-likelihood estimator based in part on a difference between the receiver complex correlation vector and the expected correlation vector using the covariance matrix of the complex coloured noise present at post correlation level for the set of N correlations,
and wherein the coarse location of the main peak from the first set of correlations is used to constrain the post-correlation maximum-likelihood estimator used to determine the fine location of the main peak thereby constraining the fine location from the second set of correlations, such that the fine location is determined for said main peak to perform said tracking,
wherein the expected correlation vector is for a given code delay and accounts for receiver effects.


**Patentansprüche**

1. Verfahren zum Verfolgen eines Binärer-Offset-Träger-Navigationssignals in einem Empfänger (701) eines globalen Satellitennavigationssystems (GNSS) durch Lokalisieren der Hauptkorrelationsspitze des Binärer-Offset-Träger-Signals, wobei die Binärer-Offset-Träger-Autokorrelationsfunktion aus einer Hauptspitze, entsprechend einem Offset von null, und mehreren Nebenspitzen, jeweils mit bekannter Breite, besteht, wobei das Verfahren umfasst:

Erzeugen eines Satzes von N Korrelationen aus dem Binärer-Offset-Träger-Navigationssignal zu einem Zeitpunkt;
Verwenden eines ersten Satzes von Korrelationen, der aus dem Satz von N Korrelationen abgeleitet wird, um eine Grobposition der Hauptspitze zu bestimmen, um die Hauptspitze von den Nebenspitzen zu unterscheiden, wobei die Bestimmung teilweise auf einem Post-Korrelations-Maximum-Likelihood-Schätzer basiert, der teilweise auf einer Differenz zwischen dem komplexen Korrelationsvektor des Empfängers und einem erwarteten Korrelationsvektor basiert, unter Verwendung der Kovarianzmatrix des komplexen farbigen Rauschens, das beim Post-Korrelationsniveau für den Satz von N Korrelationen vorhanden ist, wobei die farbige Kovarianz-Rauschmatrix von dem zu verfolgenden Binärer-Offset-Träger-Signal abhängt; und
Verwenden eines zweiten Satzes von Korrelationen, der aus dem Satz von N Korrelationen abgeleitet wird, um eine Feinposition der Hauptspitze zu bestimmen, wobei der zweite Satz von Korrelationen innerhalb der bekannten Breite der Hauptspitze liegt, wobei die Bestimmung teilweise auf einem Post-Korrelations-Maximum-Likelihood-Schätzer basiert, der teilweise auf einer Differenz zwischen dem Korrelationsvektor des Empfängers und dem erwarteten Korrelationsvektor basiert, unter Verwendung der Kovarianzmatrix des komplexen farbigen Rauschens, das beim Post-Korrelationsniveau für den Satz von N Korrelationen vorhanden ist,
und wobei die Grobposition der Hauptspitze aus dem ersten Satz von Korrelationen verwendet wird, um den Post-Korrelations-Maximum-Likelihood-Schätzer zu beschränken, der verwendet wird, um die Feinposition der Hauptspitze zu bestimmen, wodurch die Feinposition aus dem zweiten Satz von Korrelationen beschränkt wird, sodass die Feinposition für die Hauptspitze zum Durchführen der Verfolgung bestimmt wird, wobei der erwartete Korrelationsvektor für eine gegebene Codeverzögerung vorliegt und Empfängereffekte berücksichtigt.

2. Verfahren nach Anspruch 1, wobei der erste Satz von Korrelationen zumindest die bekannte Breite der Hauptspitze plus zumindest einem Teil der bekannten Breite von zwei Nebenspitzen überspannt, die sich unmittelbar angrenzend zu, und auf gegenüberliegenden Seiten, der Hauptspitze befinden.

3. Verfahren nach einem vorstehenden Anspruch, wobei die Anzahl und Position des ersten Satzes von Korrelationen ermöglicht, dass die Hauptspitze von den Nebenspitzen basierend auf einer bekannten Teilung der Autokorrelationsfunktion in die Hauptspitze und Nebenspitzen aufgrund des Binärer-Offset-Träger-Signals unterschieden wird.

4. Verfahren nach einem vorstehenden Anspruch, wobei der erste Satz von Korrelationen mindestens fünf Korrelationen umfasst.

5. Verfahren nach einem vorstehenden Anspruch, wobei der zweite Satz von Korrelationen eine frühe Korrelation, eine zeitnahe Korrelation und eine späte Korrelation nutzt.

6. Verfahren nach einem vorstehenden Anspruch, wobei die Anzahl von Korrelationen im zweiten Satz von Korrelationen kleiner ist als die Anzahl von Korrelationen im ersten Satz von Korrelationen.

7. Verfahren nach einem vorstehenden Anspruch, wobei die Korrelationen im zweiten Satz von Korrelationen häufiger neu berechnet werden als die Korrelationen im ersten Satz von Korrelationen.

8. Verfahren nach einem vorstehenden Anspruch, wobei die Grobposition der Hauptspitze aus dem ersten Satz von Korrelationen verwendet wird, um den zweiten Satz von Korrelationen zu beschränken, sodass die bestimmte Position für die Hauptspitze dient.

9. Verfahren nach einem vorstehenden Anspruch, wobei der zweite Satz von Korrelationen ein Teilsatz des ersten Satzes von Korrelationen ist.

10. Verfahren nach einem vorstehenden Anspruch, wobei der Empfänger N Korrelatoren (728) zum Erzeugen von N jeweiligen Korrelationen einschließt.

11. Empfänger (701) zum Verfolgen eines Binärer-Offset-Träger-Navigationssignals in einem globalen Satellitennavigationssystem (GNSS) durch Lokalisieren der Hauptkorrelationsspitze des Binärer-Offset-Träger-Signals, wobei die Autokorrelationsfunktion aus einer Hauptspitze, entsprechend einem Offset von null, und mehreren Nebenspitzen, jeweils mit bekannter Breite, besteht, wobei der Empfänger ausgelegt ist zum:

Erzeugen eines Satzes von N Korrelationen aus dem Binärer-Offset-Träger-Navigationssignal zu einem Zeitpunkt;
Verwenden eines ersten Satzes von Korrelationen, der aus den N Korrelationen abgeleitet wird, um eine Grobposition der Hauptspitze zu bestimmen, um die Hauptspitze von den Nebenspitzen zu unterscheiden, wobei die Bestimmung teilweise auf einem Post-Korrelations-Maximum-Likelihood-Schätzer basiert, der teilweise auf einer Differenz zwischen dem komplexen Korrelationsvektor des Empfängers und einem erwarteten Korrelationsvektor basiert, unter Verwendung der Kovarianzmatrix des komplexen farbigen Rauschens, das beim Post-Korrelationsniveau für den Satz von N Korrelationen vorhanden ist, wobei die farbige Kovarianz-Rauschmatrix von dem zu verfolgenden Binärer-Offset-Träger-Signal abhängt; und
Verwenden eines zweiten Satzes von Korrelationen, der aus dem Satz von N Korrelationen abgeleitet wird, um eine Feinposition der Hauptspitze zu bestimmen, wobei der zweite Satz von Korrelationen innerhalb der bekannten Breite liegt, wobei die Bestimmung teilweise auf einem Post-Korrelations-Maximum-Likelihood-Schätzer basiert, der teilweise auf einer Differenz zwischen dem komplexen Korrelationsvektor des Empfängers und dem erwarteten Korrelationsvektor basiert, unter Verwendung der Kovarianzmatrix des komplexen farbigen Rauschens, das beim Post-Korrelationsniveau für den Satz von N Korrelationen vorhanden ist,
und wobei die Grobposition der Hauptspitze aus dem ersten Satz von Korrelationen verwendet wird, um den Post-Korrelations-Maximum-Likelihood-Schätzer zu beschränken, der verwendet wird, um die Feinposition der Hauptspitze zu bestimmen, wodurch die Feinposition aus dem zweiten Satz von Korrelationen beschränkt wird, sodass die Feinposition für die Hauptspitze zum Durchführen der Verfolgung bestimmt wird, wobei der erwartete Korrelationsvektor für eine gegebene Codeverzögerung vorliegt und Empfängereffekte berücksichtigt.


**Revendications**

1. Procédé de poursuite d'un signal de navigation avec porteuse à décalage binaire dans un récepteur (701) de système mondial de navigation par satellite (GNSS) par localisation du pic principal de corrélation du signal avec porteuse à décalage binaire, la fonction d'autocorrélation de porteuse à décalage binaire étant composée d'un pic principal, correspondant à un décalage nul, et de multiples pics latéraux, chacun de largeur connue, le procédé comportant les étapes consistant à :

produire un ensemble de N corrélations à partir du signal de navigation avec porteuse à décalage binaire à un instant ;

utiliser un premier ensemble de corrélations, tiré de l'ensemble de N corrélations, pour déterminer une localisation grossière du pic principal, de façon à distinguer le pic principal des pics latéraux, la détermination étant basée en partie sur un estimateur au maximum de vraisemblance post-corrélation basé en partie sur une différence entre le vecteur de corrélation complexe du récepteur et un vecteur de corrélation attendu à l'aide de la matrice de covariance du bruit coloré complexe présent au niveau post-corrélation pour l'ensemble de N corrélations, la matrice de covariance du bruit coloré dépendant du signal avec porteuse à décalage binaire à poursuivre ; et

utiliser un second ensemble de corrélations, tiré de l'ensemble de N corrélations, pour déterminer une localisation fine du pic principal, le second ensemble de corrélations se trouvant à l'intérieur de ladite largeur connue du pic principal, la détermination étant basée en partie sur un estimateur au maximum de vraisemblance post-corrélation basé en partie sur une différence entre le vecteur de corrélation du récepteur et le vecteur de corrélation attendu à l'aide de la matrice de covariance du bruit coloré complexe présent au niveau post-corrélation pour l'ensemble de N corrélations,

et la localisation grossière du pic principal issue du premier ensemble de corrélations étant utilisée pour contraindre l'estimateur au maximum de vraisemblance post-corrélation utilisé pour déterminer la localisation fine du pic principal, contraignant ainsi la localisation fine issue du second ensemble de corrélations, de telle façon que la localisation fine soit déterminée pour ledit pic principal afin d'effectuer ladite poursuite, le vecteur de corrélation attendu étant pour un retard de code donné et tenant compte des effets de récepteur.

2. Procédé selon la revendication 1, le premier ensemble de corrélations s'étendant sur au moins la largeur connue du pic principal plus au moins une partie de la largeur connue de deux pics latéraux situés de façon immédiatement adjacente au pic principal et sur des côtés opposés de celui-ci.

3. Procédé selon l'une quelconque des revendications précédentes, le nombre et la localisation du premier ensemble de corrélations permettant au pic principal d'être distingué des pics latéraux d'après une répartition connue de la fonction d'autocorrélation en le pic principal et des pics latéraux du fait du signal avec porteuse à décalage binaire.

4. Procédé selon l'une quelconque des revendications précédentes, le premier ensemble de corrélations comportant au moins cinq corrélations.

5. Procédé selon l'une quelconque des revendications précédentes, le second ensemble de corrélations utilisant une corrélation précoce, une corrélation prompte et une corrélation tardive.

6. Procédé selon l'une quelconque des revendications précédentes, le nombre de corrélations dans le second ensemble de corrélations étant inférieur au nombre de corrélations dans le premier ensemble de corrélations.

7. Procédé selon l'une quelconque des revendications précédentes, les corrélations dans le second ensemble de corrélations étant recalculées plus fréquemment que les corrélations dans le premier ensemble de corrélations.

8. Procédé selon l'une quelconque des revendications précédentes, la localisation grossière du pic principal issue du premier ensemble de corrélations étant utilisée pour contraindre le second ensemble de corrélations de telle sorte que la localisation déterminée soit relative au pic principal.

9. Procédé selon l'une quelconque des revendications précédentes, le second ensemble de corrélations étant un sous-ensemble du premier ensemble de corrélations.

10. Procédé selon l'une quelconque des revendications précédentes, le récepteur comprenant N corrélateurs (728) servant à produire N corrélations respectives.

11. Récepteur (701) de poursuite d'un signal de navigation avec porteuse à décalage binaire dans un système mondial de navigation par satellite par localisation du pic principal de corrélation du signal avec porteuse à décalage binaire, la fonction d'autocorrélation étant composée d'un pic principal, correspondant à un décalage nul, et de multiples pics latéraux, chacun de largeur connue, le récepteur étant configuré pour :

produire un ensemble de N corrélations à partir du signal de navigation avec porteuse à décalage binaire à un instant ;

utiliser un premier ensemble de corrélations, tiré des N corrélations, pour déterminer une localisation grossière du pic principal, de façon à distinguer le pic principal des pics latéraux, la détermination étant basée en partie sur un estimateur au maximum de vraisemblance post-corrélation basé en partie sur une différence entre le vecteur de corrélation complexe du récepteur et un vecteur de corrélation attendu à l'aide de la matrice de covariance du bruit coloré complexe présent au niveau post-corrélation pour l'ensemble de N corrélations, la matrice de covariance du bruit coloré dépendant du signal avec porteuse à décalage binaire à poursuivre ; et utiliser un second ensemble de corrélations, tiré des N corrélations, pour déterminer une localisation fine du pic principal, le second ensemble de corrélations se trouvant à l'intérieur de ladite largeur connue, la détermination étant basée en partie sur un estimateur au maximum de vraisemblance post-corrélation basé en partie sur une différence entre le vecteur de corrélation complexe du récepteur et le vecteur de corrélation attendu à l'aide de la matrice de covariance du bruit coloré complexe présent au niveau post-corrélation pour l'ensemble de N corrélations,

et la localisation grossière du pic principal issue du premier ensemble de corrélations étant utilisée pour contraindre l'estimateur au maximum de vraisemblance post-corrélation utilisé pour déterminer la localisation fine du pic principal, contraignant ainsi la localisation fine issue du second ensemble de corrélations, de telle façon que la localisation fine soit déterminée pour ledit pic principal afin d'effectuer ladite poursuite, le vecteur de corrélation attendu étant pour un retard de code donné et tenant compte des effets de récepteur.

Figure 1A

Figure 1B

Figure 1C

Figure 2

**Figure 3**

N Correlation
Samples per
snapshot 510

Accurate Code Delay
Solution 520

Code Delay
Estimate 550

Unambiguous
Reference 540

Ambiguity Solution 530

Figure 4A

$X_i$

Narrow-correlator based
solution (closed-loop) 580

Code Delay
Estimate 550

False lock
detection and
correction 570

Ambiguity Solution (open
loop) 530

Figure 4B

Figure 5

**Figure 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006063613 A
- WO 2007101454 A

**Non-patent literature cited in the description**

- **ZIEDAN N. I.** *24th International Technical Meeting of the Satellite Division of The Institute of Navigation,* 19 September 2011
- **MUSSO et al.** *ION GNSS 19th International Technical Meeting of the Satellite Division,* 26 September 2006
- **J.A. GARCIA-MOLINA ; M. NAVARRO-GALLARDO ; G. LOPEZ-RISUEÑO ; M. CRISCI.** Unambiguous Tracking of High-Order BOC Signals in Urban Environments: Channel Considerations. *Navitec,* December 2014
- **M. NAVARRO-GALLARDO ; G. SECO-GRANADOS ; G. LÓPEZ-RISUEÑO ; M. CRISCI.** Code smoothing for BOC ambiguity mitigation. *ICL-GNSS,* October 2013
- **F. M. SCHUBERT ; J. WENDEL.** BOC Tracking using phase and subcarrier locked loops. *6th European Workshop on GNSS Signals and Signal Processing,* 05 December 2013
- **M. HODGART ; P. BLUNT ; M. UNWIN.** The optimal dual estimate solution for robust tracking of binary offset carrier (BOC) modulation. *ION GNSS,* 2007
- **N. MARTIN ; V. LEBLOND ; G. GUILLOTEL ; V. HEIRIES.** BOC(x,y) signal acquisition techniques and performances. *ION GPS/GNSS,* September 2003
- **P. FINE ; W. WILSON.** Tracking algorithm for GPS offset carrier signals. *Proceedings of the 1999 National Technical Meeting of The Institute of Navigation,* 25 January 1999
- **S. KIM ; S. YOO ; S. YOON ; S. Y. KIM.** A novel unambiguous multipath mitigation scheme for BOC(kn,n) tracking in GNSS. *Proceedings of the 2007 International Symposiun on Applications and the Internet Workshops (SAINTW'07*
- **O. JULIEN ; C. MACABIAU ; M.E. CANNON ; G. LACHAPELLE.** ASPeCT: Unambiguous sine-BOC(n,n) acquisition/tracking technique for navigation applications. *Aerospace and Electronic Systems, IEEE Transactions on,* January 2007, vol. 43 (1), 150, , 162
- **S. M. KAY.** Fundamentals of Statistical Signal Processing. Estimation Theory. Prentice Hall, 2013
- **E. D. KAPLAN ; C. J. HEGARTY.** Understanding GPS, Principles and Applications. Artech House, 2006